(19) **Europäisches Patentamt**

**European Patent Office**

**Office européen des brevets**

(11) **EP 0 712 345 B1**

(12) **EUROPÄISCHE PATENTSCHRIFT**

(45) Veröffentlichungstag und Bekanntmachung des Hinweises auf die Patenterteilung:
**29.01.1997 Patentblatt 1997/05**

(21) Anmeldenummer: **94926132.5**

(22) Anmeldetag: **29.07.1994**

(51) Int. Cl.$^6$: **B23K 26/14**

(86) Internationale Anmeldenummer:
**PCT/EP94/02525**

(87) Internationale Veröffentlichungsnummer:
**WO 95/03911 (09.02.1995 Gazette 1995/07)**

(54) **LASERSCHWEISSKOPF UND VERFAHREN ZU SEINEM BETRIEB**

LASER WELDING HEAD AND METHOD OF OPERATING SAME

TETE DE SOUDAGE AU LASER ET SON PROCEDE DE FONCTIONNEMENT

(84) Benannte Vertragsstaaten:
**DE FR GB IT SE**

(30) Priorität: **02.08.1993 DE 4325929**

(43) Veröffentlichungstag der Anmeldung:
**22.05.1996 Patentblatt 1996/21**

(73) Patentinhaber: **Rofin Sinar Laser GmbH**
**D-22113 Hamburg (DE)**

(72) Erfinder:
• **ROOS, Sven-Olov**
  **D-22395 Hamburg (DE)**

• **DINGER, Reinhold**
  **D-21509 Glinde (DE)**
• **LUDEWIGT, Klaus**
  **D-22113 Oststeinbek (DE)**
• **TAUFENBACH, Norbert**
  **D-21493 Basthorst (DE)**

(74) Vertreter: **Fuchs, Franz-Josef, Dr.-Ing. et al**
**Postfach 22 13 17**
**80503 München (DE)**

(56) Entgegenhaltungen:
**EP-A- 0 199 095**       **US-A- 4 992 643**
**US-A- 5 148 446**

**Beschreibung**

Die Erfindung bezieht sich auf einen Laserschweißkopf, wie er beispielsweise aus der US-A-5,148,446 bekannt ist. Außerdem bezieht sich die Erfindung auf ein Verfahren zum Betrieb eines Laserschweißkopfes.

Beim Laserschweißen tritt das Problem auf, daß aus der Schweißschmelze kleine Tröpfchen herausgerissen werden, die sich auf der Oberfläche der in der Nähe befindlichen Fokussieroptik niederschlagen und zu deren Zerstörung führen können. Ein möglicher Schutz der Fokussieroptik besteht in der Verwendung eines Schutzglases, das dann bei einer eventuellen Beschädigung ausgetauscht werden kann. Da dieses Schutzglas jedoch ebenfalls antireflexbeschichtet sein muß, ist ein kostengünstiger Einsatz von Laserschweißverfahren bei Stählen, die besonders zum Auftreten von Schweißspritzern neigen, beispielsweise bei verzinkten Stählen, in Frage gestellt.

Aus der US-A-5,148,446 ist ein Laserschweißkopf bekannt, bei dem eine laminare Gasströmung quer zur Ausbreitungsvorrichtung des Laserstrahls erzeugt wird, um einen Niederschlag von Schweißspritzern auf der Fokussieroptik zu verhindern. Das Gas strömt hierbei verhältnismäßig langsam und mit hohem Strömungsquerschnitt quer zum Laserstrahl.

In der deutschen Offenlegungsschrift 35 13 501 ist ein Laserschweißkopf offenbart, der eine Düse zum Erzeugen eines quer verlaufenden Gasstroms zwischen einer Optik zum Fokussieren des Laserstrahls und dem Strahlfokus enthält. Dieser Gasstrom dient zum Ablenken von in Richtung zur Fokussieroptik bewegten, aus der Schweißschmelze austretenden Partikeln. Gegenüber der Düse ist die Aufnahmeöffnung einer Gasabzugsleitung angeordnet, die die Gasströmung in ihrer gesamten Querschnittausdehnung einschließlich ihres Turbulenzbereiches aufnimmt.

Zur Dämpfung der durch die Turbulenzen der aus der Düse austretenden Gasströmung verursachten Schallentwicklung ist beim bekannten Laserschweißkopf zusätzlich ein die Düse umgebender Injektormantel vorgesehen, durch den ein die schnelle Gasströmung umgebender, laminar strömender Srömungsmantel erzeugt wird. Mit diesem Schutzmantel werden außerdem Turbulenzen im Schweißbereich vermindert, die zu einer Störung und Durchbrechung einer im Schweißbereich aufrechtzuerhaltenden Schutzgasatmosphäre führen können.

Es hat sich jedoch herausgestellt, daß auch mit dem bekannten Laserschweißkopf ein Niederschlag von Schweißspritzern auf der Fokussieroptik oder dem Schutzglas nicht ausgeschlossen werden kann.

Der Erfindung liegt nun die Aufgabe zugrunde, einen Laserschweißkopf anzugeben, der in kompakter Bauweise einen sicheren Schutz der im Strahlengang des Laserstrahls liegenden optischen Komponenten ermöglicht. Außerdem soll ein Verfahren zum Betrieb des Laserschweißkopfes angegeben werden.

Die genannten Aufgaben werden gemäß der Erfindung jeweils gelöst mit den Merkmalen des Patentanspruches 1 bzw. des Patentanspruches 14. Ein Laserschweißkopf gemäß der Erfindung umfaßt ein Gehäuse, in dem sich eine Austrittsöffnung für einen fokussierten Laserstrahl sowie ein innerhalb des Gehäuses verlaufender, über der Austrittsöffnung angeordneter Abschnitt eines Strömungskanals für einen laminaren Gasstrom befinden.

Die Erfindung beruht dabei der Erkenntnis, daß bei einer turbulenten Gasströmung ein sicheres Ablenken und Mitreißen der Schweißspritzer auch dann nicht gewährleistet ist, wenn eine hohe Gasgeschwindigkeit vorliegt. Dies liegt daran, daß durch die innerhalb der Gasströmung auftretenden Turbulenzen manche der Schweißspritzer, die bei verzinkten Stählen mit einer Geschwindigkeit von etwa 10 m/s aus der Schmelze austreten und einen Durchmesser von etwa 1 mm haben können, zusätzlich entgegen der Ausbreitungsrichtung des Laserstrahls beschleunigt werden können. Es hat sich herausgestellt, daß durch einen laminaren Gasstrom eine wesentlich wirksamere Ablenkung der Schweißpartikel erzeugt werden kann. Der Ablenkwinkel $\alpha$, den ein Schweißpartikel mit der Masse m, dem Durchmesser R und der Austrittsgeschwindigkeit v aus der Schweißschmelze erleidet, wenn es einen Gasstrom der Breite B, der Dichte $\rho$ und der Geschwindigkeit U kreuzt, ist durch die Gleichung

$$\alpha = R^2 \rho U^2 C_D B / m v^2$$

gegeben. Dieser Gleichung kann unmittelbar entnommen werden, daß eine hohe Geschwindigkeit des Gases U einen günstigeren Einfluß auf den Ablenkwinkel $\alpha$ ausübt als eine Vergrößerung der Breite B des Gasstroms. Der Mitnahmekoeffizient $C_D$ hängt davon ab, ob es sich um eine turbulente oder laminare Strömung handelt. Es hat sich gezeigt, daß dieser Mitnahmekoeffizient $C_D$ für eine laminare Störung höher ist als für eine turbulente Strömung.

In einer bervorzugten Ausführungsform der Erfindung sind in einem vor der Austrittsöffnung liegenden Abschnitt des Strömungskanals Mittel zum Laminarisieren der Strömung, insbesondere eine Stauplatte, angeordnet. Durch diese Maßnahme kann eine kompakte Bauform des Laserschweißkopfes ermöglicht werden, da zum Erzeugen laminarer Strömungen in der Regel lange, krümmungs- und unterbrechungsfreie Strömungswege erforderlich sind, die unter räumlich beengten Verhältnissen nicht verfügbar sind. Auf diese Weise wird eine in den Laserschweißkopf eintretende turbulente Strömung auf engstem Raum vor Erreichen des Laserstrahls in eine laminare Strömung umgewandelt.

Vorzugsweise weist der Strömungskanal Mittel zum Erzeugen eines Unterdruckes im Bereich der Austrittsöffnung auf. Dadurch wird ein leichter Gasstrom vom Schweißgut zur Austrittsöffnung hin erzeugt.

Vorzugsweise ist eine einstellbare stufenförmige Querschnittserweiterung, insbesondere in Gestalt einer in die Austrittsöffnung eingesetzten Hülse vorgesehen.

Dadurch kann der Unterdruck im Bereich der Austrittsöffnung und somit auch der von außerhalb des Strömungskanals in die Austrittsöffnung eintretende Gasstrom eingestellt werden.

In einer besonders bevorzugten Ausführungsform enthält der Laserschweißkopf eine Schutzkammer in der sich der Laserstrahl vor Erreichen des Strömungskanals ausbreitet, sowie Mittel zum Erzeugen eines Überdrucks in dieser Schutzkammer. Vorzugsweise geschieht es dadurch, daß die Schutzkammer mit der Hochdruckseite des Strömungskanals strömungstechnisch verbunden ist. Dadurch wird eine zusätzliche leichte, von den optischen Komponenten weggerichtete Strömung in Richtung der Austrittsöffnung erzeugt.

Bei einem Verfahren zum Betrieb des erfindungsgemäßen Laserschweißkopfes sind die Druck- und Strömungsverhältnisse im Strömungskanal derart gewählt, daß im Bereich der Austrittsöffnung eine laminare Strömung mit einer Strömungsgeschwindigkeit von wenigstens 100 m/s, insbesondere nahezu 300 m/s vorliegt.

Zur weiteren Erläuterung der Erfindung wird auf das Ausführungsbeispiel der Zeichnung verwiesen, in deren

Figur 1 ein geöffneter Laserschweißkopf gemäß der Erfindung perspektivisch veranschaulicht ist.

Figur 2 zeigt einen Schnitt eines Laserschweißkopfes im Bereich der Austrittsöffnung.

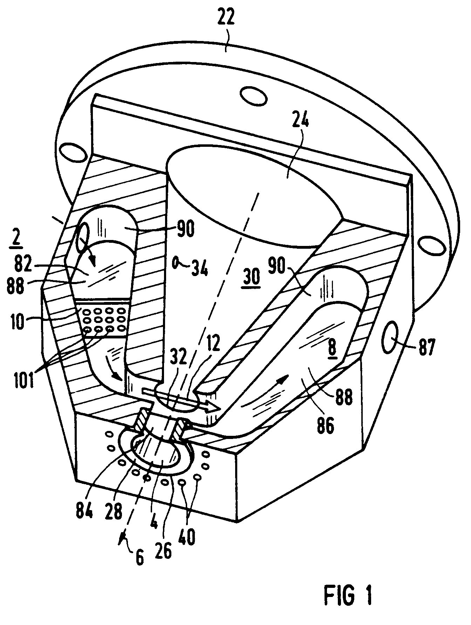

Gemäß **Figur 1** enthält einen Laserschweißkopf ein Gehäuse 2 mit einer Austrittsöffnung 4 für einen fokussierten Laserstrahl 6. Das Gehäuse 2 ist auf einem Flansch 22 angeordnet. der ein Schutzfenster 24 zum Schutz einer in der Figur nicht dargestellten, hinter dem Laserschweißkopf angeordneten Fokussieroptik aufnimmt. Die Austrittsöffnung 4 wird durch eine in eine Öffnung 26 des Gehäuses 2 eingesetzte, auswechselbare Hülse 28 gebildet.

Im geöffnet dargestellten Gehäuse 2 befindet sich ein u-förmig verlaufender Strömungskanal 8 für einen wenigstens im Bereich der Austrittsöffnung 4 laminar strömenden Gasstrom 12. Als Gas ist beispielsweise Luft oder Stickstoff geeignet. Der Strömungskanal 8 umfaßt mehrere hintereinander angeordnete Abschnitte, die jeweils unterschiedliche Funktionen erfüllen.

Durch den linken Schenkel des u-förmigen Strömungskanals 8 wird eine Beschleunigungskammer 82 gebildet , die an einer in der Figur nicht näher dargestellte, von außen an den Laserschweißkopf herange-führte, beispielsweise flexible Gasleitung ange-schlossen ist. Die Beschleunigungskammer 82 bewirkt eine Umlenkung des in sie einströmenden Gases um annähernd 90° und verursacht durch düsenförmige Verengung ihres Querschnittes eine Beschleunigung der Gasströmung.

An die Beschleunigungskammer 82 schließt sich ein quer zur Ausbreitungsrichtung des fokussierten Laserstrahls 6 orientierter Querkanal 84 an. Dieser Querkanal 84 ist zur Austrittsöffnung 4 hin offen und ist gegenüber dieser Austrittsöffnung 4 mit einer weiteren seitlichen Öffnung 32 versehen, durch die der fokussierte Laserstrahl 6 in den Querkanal 84 eintritt, so daß sich der in ihm strömende Gasstrom 12 und der fokussierte Laserstrahl 6 kreuzen.

Die Öffnung 32 führt in eine kegelstumpfförmige Schutzkammer 30, in der sich der fokussierte Laserstrahl 6 zwischen dem Querkanal 84 und dem Schutzfenster 24 ausbreitet.

Die kegelstumpfförmige Schutzkammer 30 ist mit einer Bohrung 34 versehen, mit der eine Verbindung zur Beschleunigungskammer 82 hergestellt wird, in der ein höherer Druck herrscht als im Bereich der Öffnung 32 der Schutzkammer 30.

Der Querkanal 84 mündet in eine die Gasströmung erneut um annähernd 90° umlenkende Expansionskammer 86, von der aus das strömende Gas das Gehäuse 2 durch eine seitliche Abzugsöffnung 87 verläßt.

Die oberen und unteren Wandflächen 88 des Strömungskanals 8 sind eben und grenzen an sich senkrecht dazu erstreckende, abschnittsweise gekrümmte Seitenwände 90.

In der Beschleunigungskammer 82 wird der Strömungsquerschnitt um einen Faktor 4 bis 8 verringert, um eine Erhöhung der Gasgeschwindigkeit auf etwa 300 m/s oder etwa 90% der Schallgeschwindigkeit zu ermöglichen. Im Anfangsbereich der Querschnittsverengung ist eine Stauplatte 10 zum Formen der Gasströmung 12 eingefügt, deren Dicke beispielsweise 2 mm beträgt und die eine Vielzahl von Öffnungen 101 mit einem Durchmesser von etwa 1 mm trägt. Im Ausführungsbeispiel hat die Stauplatte eine quadratische Fläche mit einer Kantenlänge von 11 mm und enthält 150 Bohrungen 101 mit einem Durchmesser von etwa 0,6 mm. Dadurch kann trotz der auf engstem Raum erfolgenden Umlenkung der Gasströmung auch bei Gasgeschwindigkeiten in der Nähe der Schallgeschwindigkeit ein laminare Strömung erzwungen werden.

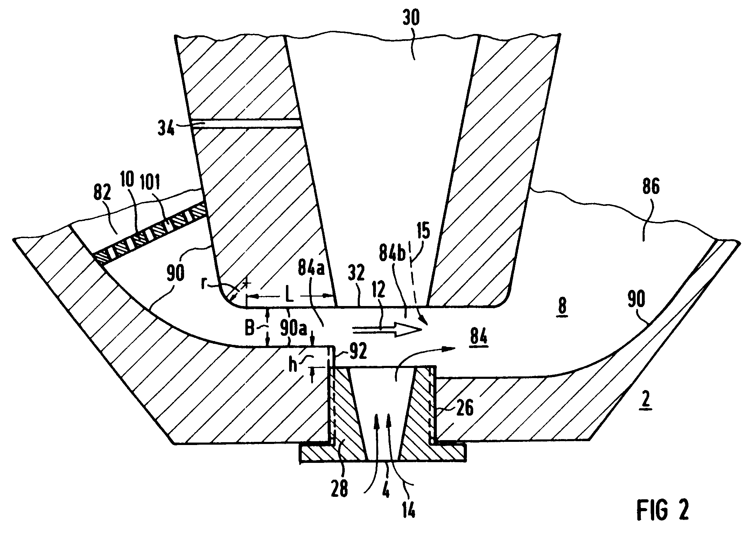

Der Laserschweißkopf enthält vorzugsweise außerdem noch zusätzliche Einrichtungen, mit denen eine Schutzgasatmosphäre im Bereich der Schweißstelle erzeugt und aufrechterhalten wird. Zum Erzeugen eines auf die Schweißstelle gerichteten Schutzgasstromes sind um die Austrittsöffnung 4 ringförmig eine Vielzahl kleiner Auströmöffnungen 40 angeordnet, durch die Schutzgas aus innerhalb des Gehäuses 2 verlaufenden und in der Figur nicht dargestellten Kanälen im wesentlichen parallel zum Laserstrahl austritt und diesen konzentrisch umgibt. Anstelle einer Vielzahl kleiner Ausströmöffnungen 40 kann auch eine zusammenhängende ringförmige Ausströmöffnung vorgesehen sein. In der Schnittdarstellung gemäß **Figur 2** ist zu erkennen, daß in einem ersten, sich unmittelbar an die Beschleunigungskammer 82 anschließenden Abschnitt 84a des Querkanals 84, eine Formung des Gasstroms 12 erfolgt. Dieser erste Abschnitt 84a ist hierzu mit ebenen Seitenwänden 90a versehen und hat eine Länge L, die wenigstens etwa das zwei- bis dreifache seiner Breite B beträgt. Im Ausführungsbeispiel betragen die Länge L ungefähr 9 mm und die Breite etwa 2 mm. An diesen ersten Abschnitt 84a schließt sich ein zweiter Abschnitt 84b an, dessen Querschnitt in Form einer Stufe 92 gegenüber dem Querschnitt des ersten Abschnitts 84a erweitert ist. Diese Stufe 92 wird durch eine in eine Öffnung 26 des Gehäuses 2 eingesetzte, beispielsweise eingeschraubte, Hülse 28 festgelegt und verursacht eine Ejektorwirkung, die dazu führt, daß sich von außerhalb des Gehäuses 2 ein äußerer Saugstrom 14 zum Strömungskanal 8 hin ergibt, dessen Ausmaß durch die Höhe h der Stufe 92 eingestellt werden kann. Diese Höhe h kann im Aussführungsbeispiel von 0 - 5 mm eingestellt werden. Durch die Hülse 28 wird der Querschnitt des Austrittsfensters 4 für den Laserstrahl festgelegt. Die Innenoberfläche der Hülse 28 ist gemäß dem besonders bevorzugten Ausführungsbeispiel der Figur konisch geformt, um diesen Querschnitt auf das für die Ausbreitung des Laserstrahls notwendige Maß beschränken zu können.

Durch die Verbindung der Schutzkammer 30 mit der Beschleunigungskammer 82 über die Bohrung 34 wird in der Schutzkammer 30 ebenfalls gegenüber den Druckverhältnissen im Bereich des zweiten Abschnitts 84b ein leichter Überdruck erzeugt, der zusätzlich einen inneren Saugstrom 15 in Ausbreitungsrichtung des Laserstrahles verursacht.

In der Beschleunigungskammer 82 erfolgt neben einer Erhöhung der Gasgeschwindigkeit auch eine Umlenkung der Gasströmung. Um die durch die Stauplatte 10 erzeugte laminare Strömung nicht zu stören, dürfen die Krümmungsradien r der Seitenwände 90 nicht zu klein sein, da sonst eine Umwandlung in eine turbulente Strömung stattfindet. Es hat sich gezeigt, daß mit Krümmungsradien r im Bereich von 2 bis 6 mm eine Laminarität der Gasströmung auch bei Geschwindigkeiten in der Nähe der Schallgeschwindigkeit aufrechterhalten werden kann.

**Patentansprüche**

1. Laserschweißkopf mit einem Gehäuse (2), in dem sich eine Austrittsöffnung (4) für einen fokussierten Laserstrahl (6) befindet, sowie mit einem innerhalb des Gehäuses (2) verlaufenden Strömungskanal (8), der einen über der Austrittsöffnung (4) angeordneten Abschnitt (84) für einen im Bereich der Austrittsöffnung (4) laminaren Gasstrom (12) enthält,
   **dadurch gekennzeichnet,** daß ein in Strömungsrichtung vor der Austrittsöffnung (4) liegender Abschnitt (82) vorgesehen ist, der eine düsenförmige Querschnittsverengung zur Erhöhung der Gasgeschwindigkeit aufweist und in dem Mittel (10) zum Laminarisieren des Gasstromes (12) angeordnet sind.

2. Laserschweißkopf nach Anspruch 1,
   **dadurch gekennzeichnet,** daß als Mittel zum Laminarisieren eine mit Öffnungen (101) versehene Stauplatte (10) vorgesehen ist.

3. Laserschweißkopf nach einem der vorhergehenden Ansprüche,
   **dadurch gekennzeichnet,** daß der Strömungskanal (8) Mittel (92) zum Erzeugen eines Unterdruckes im Bereich der Austrittsöffnung (4) aufweist.

4. Laserschweißkopf nach Anspruch 3,
   **dadurch gekennzeichnet,** daß eine einstellbare stufenförmige Querschnittserweiterung (92) vorgesehen ist.

5. Laserschweißkopf nach Anspruch 4,
   **dadurch gekennzeichnet,** daß die stufenförmige Querschnittserweiterung (92) durch eine in eine Öffnung (26) des Gehäuses (2) eingesetzte Hülse (28) gebildet ist.

6. Laserschweißkopf nach Anspruch 5,
   **dadurch gekennzeichnet,** daß der In nendurchmesser der Hülse (28) in Ausbreitungsrichtung des Laserstrahls (6) abnimmt.

7. Laserschweißkopf nach einem der vorhergehenden Ansprüche,
   **dadurch gekennzeichnet,** daß der Strömungskanal (8) im Bereich der Austrittsöffnung (4) senkrecht zur Ausbreitungsrichtung des Laserstrahls (6) verläuft.

8. Laserschweißkopf nach einem der vorhergehenden Ansprüche,
   **dadurch gekennzeichnet,** daß der Strömungskanal (8) einen u-förmigen Verlauf hat.

9. Laserschweißkopf nach einem der vorhergehenden Ansprüche,
   **dadurch gekennzeichnet,** daß Mittel zum Erzeugen eines Überdrucks in einer in den Strömungskanal (8) mündenden Schutzkammer (30), in der sich der Laserstrahl (6) vor Erreichen des Strömungskanals (8) ausbreitet, vorgesehen sind.

10. Laserschweißkopf nach Anspruch 9,
    **dadurch gekennzeichnet,** daß die Schutzkammer (30 ) mit dem in Strömungsrichtung vor der Austrittsöffnung (4) liegenden Abschnitt (82) des Strömungskanals (8) strömungstechnisch verbunden ist.

11. Verfahren zum Betrieb eines Laserschweißkopfes nach einem der vorhergehenden Ansprüche,
    **dadurch gekennzeichnet,** daß die Druck- und Strömungsverhältnisse im Strömungskanal (8) derart gewählt sind, daß im Bereich der Austrittsöffnung (4) ein laminar strömender Gasstrom (12) vorliegt, dessen Strömungsgeschwindigkeit wenigstens 100 m/s beträgt.

**12.** Verfahren zum Betrieb eines Laserschweißkopfes nach Anspruch 11, **dadurch gekennzeichnet,** daß die Strömungsgeschwindigkeit annähernd 90 % der Schallgeschwindigkeit beträgt.

## Claims

**1.** Laser welding head having a housing (2) in which a emission orifice (4) for a focused laser beam (6) is located, and having a flow channel (8) extending within the housing (2) which includes a section (84) arranged above the emission orifice (4) for a laminar stream of gas (12) in the region of the emission orifice (4), characterised in that a section (82) situated upstream of the emission orifice (4) in the direction of flow is provided which comprises a nozzle-shaped cross-sectional constriction for the purpose of increasing the gas velocity and in which means (10) are arranged for making the stream of gas (12) laminar.

**2.** Laser welding head according to Claim 1, characterised in that a damming plate (10) with apertures (101) is provided by way of means for producing laminar flow.

**3.** Laser welding head according to one of the preceding claims, characterised in that the flow channel (8) comprises means (92) for generating a partial vacuum in the region of the emission orifice (4).

**4.** Laser welding head according to Claim 3, characterised in that an adjustable stepped cross-sectional extension (92) is provided.

**5.** Laser welding head according to Claim 4, characterised in that the stepped cross-sectional extension (92) is formed by a sheath (28) which is inserted into an opening (26) in the housing (2).

**6.** Laser welding head according to Claim 5, characterised in that the inner diameter of the sheath (28) decreases in the direction in which the laser beam (6) is propagated.

**7.** Laser welding head according to one of the preceding claims, characterised in that in the region of the emission orifice (4) the flow channel (8) extends perpendicular to the direction in which the laser beam (6) is propagated.

**8.** Laser welding head according to one of the preceding claims, characterised in that the flow channel (8) is u-shaped.

**9.** Laser welding head according to one of the preceding claims, characterised in that means are provided for generating an excess pressure in a protective chamber (30) that leads into the flow channel (8), the laser beam (6) being propagated in said protective chamber before reaching the flow channel (8).

**10.** Laser welding head according to Claim 9, characterised in that the protective chamber (30) is fluidically connected to the section (82) of the flow channel (8) situated upstream of the emission orifice (4) in the direction of flow.

**11.** Process for operating a laser welding head according to one of the preceding claims, characterised in that the conditions relating to pressure and flow in the flow channel (8) are chosen in such a way that in the region of the emission orifice (4) a stream of gas (12) is present which flows in laminar manner, the flow rate of which amounts to at least 100 m/s.

**12.** Process for operating a laser welding head according to Claim 11, characterised in that the flow rate amounts to approximately 90% of the speed of sound.

## Revendications

**1.** Tête de soudage au laser comportant un boîtier (2), dans lequel se trouve une ouverture (4) de sortie destinée à un rayon (6) laser focalisé, et comportant une conduite (8) d'écoulement, qui s'étend à l'intérieur du boîtier (2) et qui comporte un tronçon (84), disposé au-dessus de l'ouverture (4) de sortie et destiné à un courant (12) gazeux qui est laminaire dans la zone de l'ouverture (4) de sortie, caractérisée en ce qu'il est prévu un tronçon (82) qui se trouve, dans le sens d'écoulement, en amont de l'ouverture (4) de sortie, dont la section transversale se rétrécit en forme de buse pour augmenter la vitesse des gaz et dans lequel sont disposés des moyens (10) pour rendre laminaire le courant (12) gazeux.

**2.** Tête de soudage au laser suivant la revendication 1, caractérisée en ce qu'il est prévu comme moyen de rendre laminaire le courant une chicane (10) en forme de plaque munie d'ouvertures (101).

**3.** Tête de soudage au laser suivant l'une des revendications précédentes, caractérisée en ce que la conduite (8) d'écoulement comporte des moyens (92) servant à produire une dépression dans la zone de l'ouverture (4) de sortie.

**4.** Tête de soudage au laser suivant la revendication 3, caractérisée en ce qu'il est prévu un élargissement (92) de section transversale réglable en forme de palier.

5. Tête de soudage au laser suivant la revendication 4, caractérisée en ce que l'élargissement (92) de section transversale en forme de palier est formé par un manchon (28) introduit dans une ouverture (26) du boîtier (2).

6. Tête de soudage au laser suivant la revendication 5, caractérisée en ce que le diamètre intérieur du manchon (28) diminue dans le sens de propagation du rayon (6) laser.

7. Tête de soudage au laser suivant l'une des revendications précédentes, caractérisée en ce que, dans la zone de l'ouverture (4) de sortie, la conduite (8) d'écoulement s'étend perpendiculairement à la direction de propagation du rayon (6) laser.

8. Tête de soudage au laser suivant l'une des revendications précédentes, caractérisée en ce que la conduite (8) d'écoulement a un tracé en forme de U.

9. Tête de soudage au laser suivant l'une des revendications précédentes, caractérisée en ce qu'il est prévu des moyens pour produire une surpression dans une chambre (30) protectrice qui débouche dans la conduite (8) d'écoulement et dans laquelle le rayon (6) laser se propage avant d'avoir atteint la conduite (8) d'écoulement.

10. Tête de soudage au laser suivant la revendication 9, caractérisée en ce que la chambre (30) protectrice communique du point de vue de l'écoulement avec le tronçon (82) de la conduite (8) d'écoulement qui se trouve, dans le sens de propagation, en amont de l'ouverture (4) de sortie.

11. Procédé pour faire fonctionner une tête de soudage au laser suivant l'une des revendications précédentes, caractérisé en ce que l'on choisit les conditions de pression et d'écoulement dans la conduite (8) d'écoulement de manière à avoir, dans la région de l'ouverture (4) de sortie, un écoulement (12) gazeux s'écoulant de manière laminaire et ayant une vitesse d'écoulement d'au moins 100 m/s.

12. Procédé pour faire fonctionner une tête de soudage au laser suivant la revendication 11, caractérisé en ce que la vitesse d'écoulement est proche de 90 % de la vitesse du son.

FIG 1

FIG 2